# FASCICULE DE BREVET EUROPEEN

(11) **EP 0 462 880 B1**
(45) Date de publication et mention de la délivrance du brevet: **12.10.1994**
(21) Numéro de dépôt: 91401610.0
(22) Date de dépôt: 17.06.1991
(51) Int. Cl.: E21B 43/02, C09K 17/00

(54) **Procédé de consolidation d'une formation géologique par une substance polymérisable à la température et à la pression de la formation**
Verfahren zur Konsolidierung einer geologischen Formation durch polymerisierbare Substanzen bei der Temperatur und dem Druck der Formation
Method for consolidating a geological formation with a polymerisable substance and the temperature and pressure of the formation

(30) Priorité: 21.06.1990 FR 9007916
(43) Date de publication de la demande: 27.12.1991
(73) Titulaire: INSTITUT FRANCAIS DU PETROLE, 92502 Rueil-Malmaison (FR)
(72) Inventeur: Gadelle, Claude, F-92500 Rueil Malmaison (FR); Lesage, Jean, F-78310 Maurepas Elancourt (FR)

(56) Documents cités:
- FR-A- 2 474 558
- FR-A- 2 575 500
- US-A- 3 208 226

## Description

La présente invention concerne un procédé de consolidation de formations géologiques, ce procédé étant notamment applicable à des réservoirs contenant du pétrole ou du gaz, pour éliminer les venues de sable dans les puits traversant des formations sableuses peu ou pas consolidées. D'une manière plus générale, ce procédé peut être utilisé pour consolider localement des formations perméables.

L'art antérieur est illustré par le brevet US 3,208,226 décrivant un système urée-formaldéhyde pour stabiliser les sols et les rendre imperméables à l'eau.

Diverses méthodes ont déjà été proposées pour empêcher les venues de sable dans les puits neufs ou pour traiter des puits donnant lieu à des venues de sable, lors de l'exploitation des gisements de pétrole ou de gaz.

Une méthode consiste à injecter, dans la formation géologique, une résine liquide qui, en se polymérisant, crée une liaison entre les grains de sable. L'efficacité d'une méthode chimique de ce type est aléatoire, car la réaction de polymérisation de la résine injectée dépend essentiellement des conditions régnant dans le puits au niveau de la formation et des caractéristiques de cette dernière. Une telle méthode ne permet donc pas de contrôler le degré d'avancement de la réaction chimique. Il en résulte le risque, soit d'une consolidation insuffisante de la formation, si le degré de polymérisation de la résine est trop faible, soit d'une trop forte réduction de la perméabilité ou même d'un colmatage complet de la formation géologique, si une trop grande quantité de polymère est retenue dans certains pores.

Pour éviter ce problème, le brevet français N° 2 474 558 décrit un procédé dans lequel la réaction de polymérisation a lieu entre un agent chimique liquide contenant des catalyseurs appropriés mis en place autour du puits à traiter et un gaz oxydant injecté.

La circulation du gaz après la mise en place de l'agent polymérisable assure le maintien de perméabilité. Le mélange organique liquide contient un composé polyéthylénique et un catalyseur tels que les réactions de polymérisation oxydante conduisent à la consolidation du milieu sans qu'il soit nécessaire de préchauffer la formation.

Cependant, ce procédé nécessite l'utilisation de mélange oxygène-gaz inerte dont la disponibilité n'est pas toujours évidente. De plus, la quantité de gaz oxydant doit être limitée pour que, par suite du dégagement de chaleur par la réaction d'oxydation, la température n'atteigne pas des valeurs supérieures à 350°C, où le produit polymérisé se dégraderait par combustion.

Le brevet français FR 2 575 500 décrit un procédé dans lequel la réaction de polymérisation d'un agent chimique liquide contenant des catalyseurs appropriés mis en place autour du puits à traiter a lieu sous l'action d'un mélange gazeux chaud et inerte chimiquement.

La circulation du gaz après la mise en place de l'agent polymérisable assure de plus le maintien de la perméabilité.

Cependant le procédé nécessite l'injection d'un mélange gazeux dont la température est comprise entre 150 et 325°C, soit une valeur nettement supérieure aux températures généralement rencontrées dans les réservoirs contenant du pétrole ou du gaz.

L'objet de la présente invention est, par suite, de proposer un procédé plus souple d'utilisation pour réaliser la consolidation d'une formation géologique, sans réduire sa perméabilité de manière appréciable. Cette méthode, applicable à des formations dont les caractéristiques notamment thermiques peuvent varier assez largement, convient particulièrement bien au traitement de puits de pétrole ou de gaz donnant lieu à des venues de sable.

Ce résultat est atteint selon l'invention par un procédé permettant de consolider une formation géologique sans réduire sa perméabilité de manière appréciable, par l'altération d'une substance polymérisable, ce procédé comportant l'injection d'un mélange liquide dans la formation, puis l'injection d'un mélange gazeux à travers ledit mélange liquide, et étant caractérisé en ce que ledit mélange liquide contient une substance polymérisable additionnée d'au moins un catalyseur type acide de Lewis et en ce que le mélange liquide se transforme, par une réaction de polymérisation s'effectuant sensiblement à la température et à la pression de la formation, en une substance liant les éléments non consolidés de la formation.

Selon une caractéristique du procédé, le gaz ou mélange gazeux est en général inerte chimiquement à la température et à la pression de la formation. Par gaz ou mélange gazeux sensiblement inerte chimiquement, on entend un gaz ou un mélange gazeux qui, dans les conditions opératoires du procédé, ne réagit sensiblement pas avec les fluides de gisement ou avec les fluides injectés. Les gaz peuvent être de l'azote, du gaz naturel, des gaz de combustion de composés hydrocarbonés, un gaz contenant de l'oxygène, utilisés seuls ou en mélange.

Selon une autre caractéristique du procédé, le gaz ou mélange gazeux injecté peut contenir une quantité substantielle d'oxygène moléculaire, pouvant aller de 0,001 à 50 % en volume par rapport au mélange gazeux, de préférence de 0,1 à 30 % en volume. Par exemple, on peut injecter de l'air, sensiblement à la pression du réservoir.

Plus particulièrement, l'invention fournit un procédé permettant de consolider une formation géologique perméable sans réduire sa perméabilité comportant les étapes suivantes:
. injection d'un mélange liquide dans la formation, ledit mélange liquide contenant une solution aqueuse de résine mélamine-formaldéhyde et au moins un catalyseur à caractère acide de Lewis,
. polymérisation dudit mélange à la température et à la pression de la dite formation en une substance liant les éléments non consolidés de la formation,
. injection d'au moins un gaz de manière à ce que ledit gaz envahisse la formation traitée pendant une durée suffisante pour que l'avancement de la réaction de polymérisation soit tel que le mélange ne soit plus mobile à la température et à la pression de la formation dans les conditions opératoires du procédé, ladite injection maintenant la perméabilité de la formation, et ledit gaz étant inerte chimiquement vis-à-vis de la formation et des fluides injectés, sa température étant inférieure à 150°C et telle qu'il n'intervienne pas dans le démarrage de la réaction de polymérisation.

L'injection du mélange gazeux permet d'éviter une réduction appréciable de la perméabilité de la formation aux fluides tels que le pétrole ou le gaz naturel.Le débit de gaz sera tel que le gaz à injecter envahisse la hauteur à traiter.

Le mélange liquide utilisé dans le procédé selon l'invention contient de une résine mélamine-formaldéhyde en solution aqueuse, additionnée d'au moins un catalyseur à caractère acide type acide de Lewis.

Les résines mélamine-formaldéhyde utilisées peuvent consister en les produits de la condensation en milieu alcalin de mélamine et de formaldéhyde dans des proportions allant par exemple d'environ 3 à 6 moles de formaldéhyde par mole de mélamine.

Elles se présentent en général sous la forme d'une poudre facilement soluble dans l'eau. La proportion d'eau peut aller de 10 à 50 % en poids de résine et de préférence de 15 à 30%.

Comme catalyseurs, on peut utiliser divers composés solubles dans l'eau à caractère acide de Lewis tels que le chlorure d'ammonium ou le chlorure de zinc en solution aqueuse ou l'acide p-toluène sulfonique, l'acide tartrique, l'acide formique ou l'acide oxalique utilisés seuls ou en mélange. La nature et la quantité de catalyseur de prise sont choisies, d'une manière générale, en fonction de la température de mise en oeuvre en général et des délais de prise imposés. On choisira de préférence le chlorure d'ammonium en solution aqueuse pour des raisons de coût de revient moindre.

La proportion de catalyseur de prise mise en jeu peut vaner par exemple de 0,001 % à 10 % en poids, par rapport au poids de la résine et de préférence de 0,05 à 5 %, ces proportions pouvant dépendre de la nature du catalyseur et de la température de la formation.

La quantité de mélange liquide injectée sera fonction du volume de la formation que l'on veut consolider. Elle sera généralement inférieure à 500 litres par mètre d'épaisseur de formation géologique, par exemple 30 à 500 l et de préférence 100 à 300 l; des quantités supérieures n'affectent cependant pas l'efficacité du procédé selon l'invention.

Dans l'application de la méthode aux réservoirs de gaz, le gaz injecté chimiquement inerte, tel que défini ci-dessus, sera avantageusement du gaz naturel.

Dans l'application de la méthode aux réservoirs d'huile, le gaz injecté sera avantageusement de l'azote, du gaz naturel ou des gaz de combustion précités. L'utilisation ou l'ajout d'air ou d'air appauvri en oxygène est également possible.

La durée d'injection du gaz sera de préférence inférieure à 72 heures ; des durées supérieures n'affectent cependant pas l'efficacité du procédé selon l'invention.

Le procédé est généralement mis en oeuvre de la façon suivante :
- on réalise une solution aqueuse de résine mélamine-formaldéhyde en présence d'une quantité définie de catalyseur. Le volume de la formation, au voisinage du puits destiné à devenir puits de production, impose habituellement que le catalyseur soit introduit en quantité telle que la polymérisation ne se réalise pas avant un temps bien défini, compte tenu de la température et de la pression de la formation, généralement inférieure à 150°C, par exemple de 50 à 120°C et le plus souvent de 70 à 100°C,
- l'injection de gaz est réalisée sensiblement immédiatement après à un débit suffisant pour envahir tout le volume de la couche au voisinage du puits et pendant une durée suffisante pour que l'avancement de la réaction de polymérisation soit tel que le produit ne soit plus mobile.

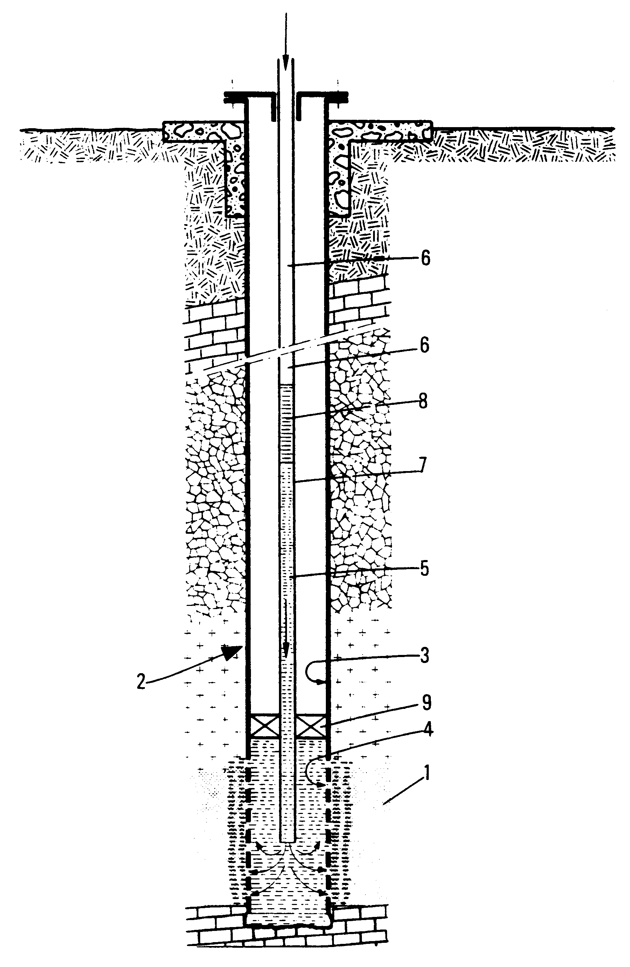

Sur la figure 1 annexée illustrant schématiquement un mode de mise en oeuvre de l'invention, la référence 1 désigne une formation géologique sableuse traversée par un puits 2, qui comporte un cuvelage 3 muni de perforations 4 au niveau de la formation 1 dont on désire extraire un fluide, tel que du pétrole ou du gaz naturel.

Dans cet exemple de réalisation, le procédé selon l'invention est mis en oeuvre en injectant successivement dans la formation 1 à traiter des quantités prédéterminées du mélange liquide 5, tel qu'une solution aqueuse de mélamine-formaldéhyde additionnée d'un catalyseur tel que défini ci-dessus, et d'un gaz inerte 6, tel que de l'azote selon les indications ci-dessus.

Le mélange liquide et le gaz peuvent être injectés à la suite l'un de l'autre par l'intermédiaire d'une même colonne de production ou tubing 7 débouchant, à sa partie inférieure, sensiblement au niveau des perforations 4.

Un dispositif 9, du type packer, assurera l'étanchéité en obturant l'espace annulaire entre le cuvelage 3 et la colonne de production 7, au-dessus de la formation 1. Dans la colonne de production 7, le gaz inerte est séparé du mélange liquide par un bouchon 8 d'une substance non polymérisable, ce bouchon étant constitué, par exemple, par un petit volume d'eau. On évite ainsi que des réactions du mélange organique ne se produisent à l'intérieur même de la colonne de production.

Bien entendu, le mode de mise en oeuvre décrit ci-dessus n'est nullement limitatif, d'autres modes de réalisation pouvant être envisagés.

D'une façon générale, le liquide injecté en 5 est un mélange capable de se transformer, sous l'action de la température de la formation, en un polymérisat conduisant à la consolidation de ladite formation aux abords du puits.

Dans le cas des gisements de pétrole, on pourra avantageusement faire précéder l'injection du liquide 5 par l'injection de fluides tels que le xylène ou une coupe pétrolière et un alcool, tel que l'isopropanol, afin de chasser le pétrole et l'eau présents aux abords du puits qui, s'ils sont en quantités excessives, peuvent avoir un effet néfaste sur l'efficacité de la consolidation du milieu.

La quantité de gaz injectée sera déterminée de façon à obtenir une solidification sensiblement complète du liquide 5.

L'efficacité du procédé selon l'invention est illustrée par les essais suivants, les caractéristiques de mise en oeuvre de ces essais n'ayant aucun caractère limitatif.

### Essai n° 1

Un mélange intime de sable de carrière (granulométrie comprise en 150 et 300 micromètres) et de solution aqueuse de mélamine-formaldéhyde est tassé à la température ambiante dans une cellule horizontale de 40 cm de longueur et de 5 cm de diamètre.

Le massif obtenu en tassant 1 392 g de sable et 348 g de solution aqueuse de résine mélamine-formol * a une porosité de 40,5 %. La température est maintenue à 50°C.
* Dans les essais, on a utilisé une solution aqueuse contenant 75 % poids de résine mélamine-formol (Madurit MW 815 vendue par la Société HOECHST).

Un débit d'azote de 1 l/mn est injecté à la pression atmosphérique pendant 45 heures. En fin d'essai, on observe que le massif n'est pas consolidé.

Il apparait donc que dans les conditions choisies aucune réaction ne se produit dans le massif imprégné de solution de mélamine-formol.

### Essai n° 2

On réalise le même essai que l'essai n° 1 en ajoutant à la solution de mélamine-formol une quantité de catalyseur - acide p-toluène sulfonique - de 7 g soit 2,7 % poids de catalyseur par rapport à la résine.

Après 25 h d'opération, on constate que le massif est consolidé ; sa résistance à la compression est de 35 bar.

### Essai n° 3

On réalise le même essai que l'essai n° 2, mais en doublant la quantité de catalyseur - soit 5,4 %. Après 3,4 h d'essai on constate que le massif est consolidé ; sa résistance à la compression est de 44 bar.

### Essai n° 4

Un massif est constitué par mélange préalable de 1 291 g de sable de carrière et de 329 g de solution aqueuse de résidu mélamine-formol de l'exemple 1 additionnée de 26,5 g d'une solution aqueuse à 2 % poids de chlorure d'ammonium, soit 0,2 % de catalyseur par rapport à la résine. Dans ce massif porté à 50°C, on injecte de l'azote à pression atmosphérique à un débit de 1,00 l/mn pendant 48 h.

La résistance à la compression du milieu obtenu après essai est de 140 bar.

### Essai n° 5

On effectue un essai dans des conditions identiques à celles de l'essai n° 4 avec une quantité de catalyseur deux fois plus faible, soit 0,1 % de catalyseur et en injectant de l'air à pression atmosphérique au lieu de l'azote pendant 71 h.

La résistance à la compression du milieu après essai est de 145 bar.

### Essai n° 6

Un massif identique à celui de l'essai n° 4 est porté à une température de 75°C. On injecte de l'azote à pression atmosphérique à un débit de 0,7 l/mn pendant 22 h.

Après essai, on constate que le massif est bien consolidé; sa résistance à la compression est de 140 bar.

### Essai n° 7

Un massif est constitué par un mélange pondéral de 66 % de sable de carrière, de 13 % de kaolinite et de 21 % de solution aqueuse de résine mélamine-formol de l'exemple 1 contenant 3,8 % d'une solution aqueuse à 2 % poids de NH₄Cl. On injecte de l'azote à un débit de 2 l/mn pendant 21 h, dans ce massif porté à 75°C.

Après essai, la résistance à la compression du milieu est de 200 bar.

### Essai n° 8

Dan ce massif identique à celui de l'essai n° 6, mais avec une quantité de catalyseur de 0,05 % par rapport à la résine, on injecte de l'azote pendant 41 h, le massif étant porté à une température de 75°C.

Après essai, le massif est bien consolidé; sa résistance à la compression est de 140 bar.

### Essai n° 9

Dans un massif constitué de 87,5 % de sable de carrière, de 3,5 % de kaolinite et de 9 % d'eau, on injecte un pétrole brut de façon à saturer le volume de pores libre. Après déplacement des fluides en place par des bouchons d'essence, puis d'alcool isopropylique, on injecte un mélange composé de 99 % de solution aqueuse de résine mélamine-formol de l'exemple 1 et de 1 % de solution aqueuse de chlorure d'ammonium à 2 % poids, soit 0,027 % de catalyseur par rapport à la résine.

La cellule est chauffée à 100°C sous une pression de 5 bar, et de l'azote est injecté à un débit de 2,4 l/mn pendant 4 heures.

Après essai, le milieu a conservé sa perméabilité et est bien consolidé; la résistance à la compression est comprise entre 60 et 190 bar suivant les échantillons prélevés en fin d'essai.

## Revendications

1. Procédé permettant de consolider une formation géologique perméable sans réduire sa perméabilité comportant les étapes suivantes:
. injection d'un mélange liquide dans la formation, ledit mélange liquide contenant une solution aqueuse de résine mélamine-formaldéhyde et au moins un catalyseur à caractère acide de Lewis,
. polymérisation dudit mélange à la température et à la pression de la dite formation en une substance liant les éléments non consolidés de la formation,
. injection d'au moins un gaz de manière à ce que ledit gaz envahisse la formation traitée pendant une durée suffisante pour que l'avancement de la réaction de polymérisation soit tel que le mélange ne soit plus mobile à la température et à la pression de la formation dans les conditions opératoires du procédé, ladite injection maintenant la perméabilité de la formation, et ledit gaz étant inerte chimiquement vis-à-vis de la formation et des fluides injectés, sa température étant inférieure à 150°C et telle qu'il n'intervienne pas dans le démarrage de la réaction de polymérisation.

2. Procédé selon la revendication 1, dans lequel le gaz est choisi dans le groupe formé par le gaz naturel, l'azote, les gaz de combustion de composés hydrocarbonés, de l'air et leurs mélanges.

3. Procédé selon l'une des revendications 1 à 2, dans lequel la résine mélamine-formaldéhyde consiste en les produits de condensation en milieu alcalin de mélamine et de formaldéhyde dans des proportions de 3 à 6 moles de formaldéhyde par mole de mélamine.

4. Procédé selon l'une des revendications 1 à 3, dans lequel le catalyseur est choisi dans le groupe formé par le chlorure d'ammonium, l'acide p-toluène, l'acide tartrique, l'acide formique, l'acide oxalique et leurs mélanges.

5. Procédé selon l'une des revendications 1 à 4, dans lequel la proportion de catalyseur est de 0,001 à 10% en poids par rapport au poids de la substance et de préférence de 0,05 à 5 %.

6. Procédé selon l'une des revendications 1 à 5, dans lequel on injecte par un puits dans des conditions appropriées de 30 à 500 litres de mélange liquide par mètre d'épaisseur de formation géologique.

7. Procédé selon l'une des revendications 1 à 7, dans lequel le catalyseur est le chlorure d'ammonium ou l'acide p-toluène sulfonique.

## Claims

1. A process that allows a permeable geological formation to be consolidated without reducing its permeability, comprising the following steps:
. a liquid mixture is injected into the formation, the liquid mixture containing an aqueous solution of melamine-formaldehyde resin and at least one catalyst of the Lewis acid type,
. the mixture is polymerised at the temperature and pressure levels of the formation to form a substance that binds the non-consolidated elements in the formation,
. at least one gas is injected so that the gas permeates the treated formation for a sufficient period to allow the polymerisation reaction to proceed until the mixture is no longer mobile at the temperature and pressure levels of the formation under the operating conditions of the process, the injection maintaining the permeability of the formation and the gas being chemically inert in relation to the formation and the injected fluids, its temperature being below 150°C and such that it will not trigger the polymerisation reaction.

2. A process in accordance with claim 1, in which the gas is selected from the group comprising natural gas, nitrogen, hydrocarbon-based combustion gases, air and their mixtures.

3. A process in accordance with one of claims 1 and 2, in which the melamine-formaldehyde resin is made by condensing melamine and formaldehyde in an alkaline medium in proportions of 3 to 6 moles of formaldehyde per mole of melamine.

4. A process in accordance with one of claims 1 to 3, in which the catalyst is chosen from the group comprised by ammonium chloride, p-toluene acid, tartaric acid, formic acid, oxalic acid and their mixtures.

5. A process in accordance with one of claims 1 to 4, in which the proportion of catalyst is 0.001 to 10% by weight relative to the weight of the substance and preferably between 0.05 and 5%.

6. A process in accordance with one of claims 1 to 5, in which between 30 and 500 litres of liquid mixture per metre thickness of the geological formation are injected via a well under appropriate conditions.

7. A process in accordance with one of claims 1 to 7, in which the catalyst is ammonium chloride or p-toluene sulphonic acid.

## Patentansprüche

1. Verfahren zur Konsolidierung einer geologischen, permeablen Formation ohne Verminderung ihrer Permeabilität, die folgenden Stufen umfassend:
. Injektion eines flüssigen Gemisches in die Formation, wobei dieses flüssige Gemisch eine wässrige Lösung von Melamin-Formaldehydharz und wenigstens einen Katalysator mit Lewis-Säure-Charakter enthält,
. Polymerisation dieses Gemisches bei der Temperatur und dem Druck dieser Formation in eine Substanz, die die nicht konsolidierten Elemente der Formation verbindet, und
. Injektion wenigstens eines Gases, derart, daß dieses Gas in die behandelte Formation während einer ausreichenden Dauer eindringt, damit der Polymerisationsreaktionsfortschritt derart wird, daß das Gemisch nicht mehr bei der Temperatur und dem Druck der Formation unter den Arbeitsbedingungen des Verfahrens beweglich ist, wobei diese Injektion die Permeabilität der Formation aufrechterhält und dieses Gas chemisch inert gegenüber der Formation und den injizierten Fluiden ist, seine Temperatur niedriger als 150°C ist und derart, daß kein störender Eingriff in das Anlaufen der Polymerisationsreaktion erfolgt.

2. Verfahren nach Anspruch 1, bei dem das Gas gewählt ist aus der Gruppe, die gebildet wird durch Erdgas, Stickstoff, die Verbrennungsgase von kohlenstoffhaltigen Verbindungen, von Luft und deren Gemischen.

3. Verfahren nach einem der Ansprüche 1 - 2, bei dem das Melamin-Formaldehydharz aus den Kondensationsprodukten in alkalischer Umgebung des Melamins und des Formaldehyds in Anteilen von 3-6 Mol Formaldehyd pro Mol Melamin besteht.

4. Verfahren nach einem der Ansprüche 1-3, bei dem der Katalysator gewählt ist aus der Gruppe, die gebildet ist durch Ammoniumchlorid, p-Toluolsäure, Weinsäure, Ameisensäure, Oxalsäure und deren Gemischen.

5. Verfahren nach einem der Ansprüche 1-4, bei dem der Anteil des Katalysators zwischen 0,001 bis 10 Gewichtsprozent bezogen auf das Gewicht der Substanz und vorzugsweise 0,05 bis 5 Gewichtsprozent beträgt.

6. Verfahren nach einem der Ansprüche 1-5, bei dem man durch ein Bohrloch unter geeigneten Bedingungen zwischen 30 und 500 Liter flüssiges Gemisch pro Meter Dicke der geologischen Formation injiziert.

7. Verfahren nach einem der Ansprüche 1-7, bei dem der Katalysator Ammoniumchlorid oder p-Toluol-Sulfonsäure ist.
